(19) Europäisches Patentamt
European Patent Office
Office européen des brevets

(11) EP 4 749 713 A1

(12) EUROPEAN PATENT APPLICATION

(43) Date of publication:
**27.05.2026 Bulletin 2026/22**

(21) Application number: **25217398.4**

(22) Date of filing: **20.11.2025**

(51) International Patent Classification (IPC):
***H01M 4/36*** *(2006.01)* ***H01M 4/62*** *(2006.01)*
***H01M 4/131*** *(2010.01)*

(52) Cooperative Patent Classification (CPC):
**H01M 4/366; H01M 4/131; H01M 4/622;**
**H01M 4/625;** H01M 2004/021

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.11.2024 KR 20240166222**

(71) Applicant: **SAMSUNG SDI CO., LTD.**
**Yongin-si, Gyeonggi-do 17084 (KR)**

(72) Inventors:
- **KIM, Chaeyoung**
  **17084 Yongin-si, Gyeonggi-do (KR)**
- **PARK, JeongJoo**
  **17084 Yongin-si, Gyeonggi-do (KR)**
- **JEONG, Hyejeong**
  **17084 Yongin-si, Gyeonggi-do (KR)**
- **CHANG, Mise**
  **17084 Yongin-si, Gyeonggi-do (KR)**
- **LEE, Jungmin**
  **17084 Yongin-si, Gyeonggi-do (KR)**
- **NAM, Hyun**
  **17084 Yongin-si, Gyeonggi-do (KR)**
- **LEE, Minho**
  **17084 Yongin-si, Gyeonggi-do (KR)**
- **PARK, Jin Seok**
  **17084 Yongin-si, Gyeonggi-do (KR)**

(74) Representative: **Michalski Hüttermann & Partner Patentanwälte mbB**
**Kaistraße 16A**
**40221 Düsseldorf (DE)**

# (54) ELECTRODE AND RECHARGEABLE LITHIUM BATTERY INCLUDING THE SAME

(57) The present disclosure relates to an electrode and a rechargeable lithium battery including the electrode, and a method of manufacturing an electrode for a rechargeable lithium battery. An electrode for a rechargeable lithium battery includes an electrode current collector, a first active material layer on the electrode current collector, and a second active material layer on first active material layer. The first active material layer includes a first active material, a binder, and a conductive material. The second active material layer includes a second active material and a composite conductive material. The composite conductive material includes a carbon nanostructure and an adhesive polymer bonded to a surface of the carbon nanostructure.

FIG. 2

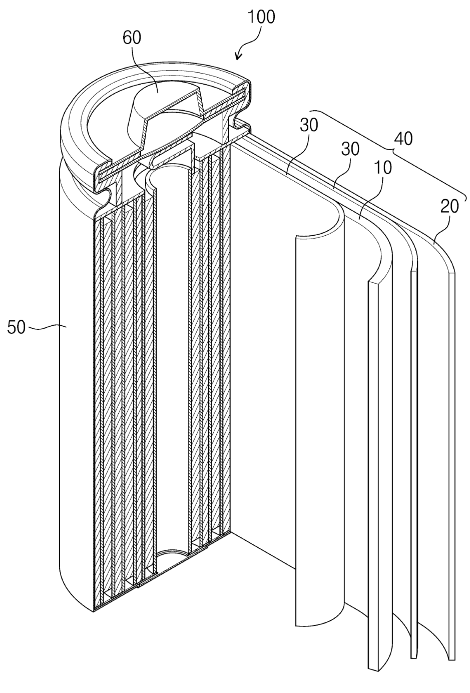




Processed by Luminess, 75001 PARIS (FR)

## Description

CROSS-REFERENCE TO RELATED APPLICATION

This application claims priority to Korean Patent Application No. 10-2024-0166222 filed on November 20, 2024 in the Korean Intellectual Property Office.

BACKGROUND

The present disclosure relates to an electrode and a rechargeable lithium battery including the electrode, and for example, to an electrode including a composite conductive material in which an adhesive polymer is bonded to a carbon nanostructure and a rechargeable lithium battery including the electrode.

With the increasing presence of battery-powered electronic devices such as, e.g., mobile phones, notebook computers, electric vehicles, and the like, the demand for rechargeable batteries with high energy density and large capacity has been increasing. In response, enhancing the performance of rechargeable lithium batteries may be advantageous.

A rechargeable lithium battery generally includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging and discharging.

SUMMARY

The issues to be addressed in the present disclosure provide an electrode having improved capacity characteristics and life characteristics.

Another object of the present disclosure is to provide a rechargeable lithium battery including the electrode.

An electrode for a rechargeable lithium battery according to an example embodiment of the present disclosure include an electrode current collector, a first active material layer on the electrode current collector, and a second active material layer on first active material layer. The first active material layer includes a first active material, a binder, and a conductive material, and a second active material layer includes the second active material and a composite conductive material. The composite conductive material includes a carbon nanostructure and an adhesive polymer physically or chemically bonded to a surface of the carbon nanostructure.

A method of manufacturing an electrode for a rechargeable lithium battery according to an example embodiment of the present disclosure include providing an electrode current collector, forming a first active material layer on the electrode current collector, and forming a second active material layer on first active material layer. The first active material layer contains a first active material, a binder, and a conductive material, and the second active material layer include a second active material and a composite conductive material. The preparation of the composite conductive material includes introducing a functional group to the surface of the carbon nanostructure, and mixing the adhesive polymer and the carbon nanostructure having a functional group to prepare a mixture.

A rechargeable lithium battery according to an example embodiment of the present disclosure includes a positive electrode, a negative electrode, a separator interposed between the positive electrode and the negative electrode, and an electrolyte solution. At least one of the positive electrode or the negative electrode include the above-described electrode.

BRIEF DESCRIPTION OF DRAWINGS

FIG. 1 is a schematic conceptual diagram of a rechargeable lithium battery according to example embodiments of the present disclosure.

FIGS. 2 to 5 are schematic diagrams illustrating a rechargeable lithium battery according to an example embodiment, in which FIG. 2 is a cylindrical battery, FIG. 3 is an angular battery, and FIGS. 4 and 5 are pouch-type batteries.

FIG. 6 is a cross-sectional view of an electrode for a rechargeable lithium battery according to example embodiments of the present disclosure.

FIG. 7 is an enlarged view for illustrating an electrode according to example embodiments of the present disclosure.

FIG. 8 is a cross-sectional view of an electrode according to other example embodiments of the disclosure.

FIG. 9 is an enlarged view for illustrating an electrode according to another example embodiment of the present disclosure.

FIG. 10 is a diagram for describing a method of manufacturing an electrode according to an example embodiment of

the present disclosure.

FIG. 11 is a schematic diagram of a manufacturing process of a composite conductive material according to an example embodiment of the present disclosure.

FIG. 12 is an SEM image of a composite conductive material according to an example embodiment of the present disclosure.

FIG. 13 is a flowchart illustrating a method of manufacturing an electrode for a rechargeable lithium battery, according to an example embodiment.

DETAILED DESCRIPTION OF EMBODIMENTS

To fully understand the configuration and effects of the present disclosure, some example embodiments are described with reference to the accompanying drawings. However, the present disclosure is not limited to the following example embodiments and may be implemented in various forms. The example embodiments are provided solely to illustrate the present disclosure and to enable those skilled in the art to fully understand its scope.

In this description, when an element is described as being "on" another element, the element may be "directly on" the other element, or one or more intervening elements may be present therebetween. In the drawings, certain thicknesses may be exaggerated to better illustrate technical details. Throughout the specification, like reference numerals indicate like elements.

The example embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe various elements, these terms are merely for distinction and do not imply any particular order or hierarchy. The example embodiments described and illustrated herein include complementary variations.

The terms used in this description help explain various example embodiments, and are not intended to limit the present disclosure. Unless explicitly stated otherwise, singular forms may also include plural forms. The terms "comprises/includes" and "comprising/including" do not exclude the presence or addition of one or more other components.

In this description, the phrase "combination thereof" may refer to a mixture, a stack, a composite, a copolymer, an alloy, a blend, or a reaction product.

The phrases "A or B," "at least one of A and B," "at least one of A or B," "A, B, or C," "at least one of A, B, and C," and "at least one of A, B, or C" include any one or all possible combinations of the listed elements.

Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) can be measured using widely known methods, such as a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

In some example embodiments, the average particle diameter may be determined by randomly selecting 100 or more particles from an electron microscope image. Alternatively, the average particle diameter may be measured using a particle size analyzer and defined as the diameter corresponding to 50 vol% in a cumulative particle size distribution.

Unless otherwise defined herein, "*" means a moiety that is connected with the same or different atom or formula.

When the terms "about" or "substantially" are used in this specification in connection with a numerical value, it is intended that the associated numerical value include a tolerance of $\pm$10% around the stated numerical value. When ranges are specified, the range includes all values therebetween such as increments of 0.1%.

FIG. 1 is a cross-sectional view of a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

The positive electrode 10 for a rechargeable lithium battery may include a current collector COL1 and a positive electrode active material layer AML1 on the current collector. The positive electrode active material layer AML1 may include a positive electrode active material and may further include a binder and/or a conductive material (e.g., an electrically conductive material).

For example, the positive electrode 10 may further include an additive that can constitute a sacrificial positive electrode.

An amount of the positive electrode active material may be in a range of ≥ 90 wt% to ≤ 99.5 wt% based on 100 wt% of the positive electrode active material layer AML1. Amounts of the binder and the conductive material may be in a range of ≥ 0.5 wt% to ≤ 5 wt%, respectively, based on 100 wt% of the positive electrode active material layer AML1.

The binder attaches the positive electrode active material particles to each other, and attaches the positive electrode active material to the current collector COL1. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause chemical change (e.g., does not cause an undesirable chemical change in the rechargeable lithium battery), and that conducts electrons, can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

Al may be used as the current collector COL1, but the current collector COL1is not limited thereto.

## Positive Electrode Active Material

The positive electrode active material may include a compound (lithiated intercalation compound) that is capable of intercalating and deintercalating lithium. For example, at least one of a composite oxide of lithium and a metal such as or including at least one of cobalt, manganese, nickel, or combinations thereof may be included.

The composite oxide may be or include a lithium transition metal composite oxide. Examples of the composite oxide may include at least one of a lithium nickel-based oxide, a lithium cobalt-based oxide, a lithium manganese-based oxide, a lithium iron phosphate-based compound, a cobalt-free nickel-manganese-based oxide, or a combination thereof.

As an example, the following compounds represented by any one of the following Chemical Formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dGeO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $LiaNiGbO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}GbO_2$ ($0.90 \leq a \leq 1.8$ and $0.001 \leq b \leq 0.1$); $LiaMn_2GbO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $LiaFePO_4$ ($0.90 \leq a \leq 1.8$).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode active material having a nickel amount of greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The high-nickel-based positive electrode active material may be capable of achieving high capacity, and can be applicable to a high-capacity, high-density rechargeable lithium battery.

## Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include 90 wt% to ≤ 99 wt% of the negative electrode active material, ≥ 0.5 wt% to ≤ 5 wt% of the binder, and ≥ 0 wt% to ≤ 5 wt% of the conductive material.

The binder may attach the negative electrode active material particles to each other, and attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., that does not cause an undesirable chemical change in the rechargeable lithium battery), and that conducts electrons, can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in the form of a metal powder or a metal fiber; a conductive polymer such as a polyphenylene derivative; or a mixture thereof.

The negative current collector COL2 may include at least one of a copper foil, a nickel foil, a stainless steel foil, a titanium foil, a nickel foam, a copper foam, a polymer substrate coated with a conductive metal, or a combination thereof.

## Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be present between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

## Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be or include a polymer film formed of or including any one of polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked together.

## Electrolyte Solution ELL

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed, and the cyclic carbonate and the chain carbonate may be mixed in a volume ratio in a range of $\geq$ 1:1 to $\leq$ 1:9.

The lithium salt dissolved in the organic solvent is configured to supply lithium ions in a battery, to enable an operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

## Rechargeable Lithium Battery

The rechargeable lithium battery may be classified into cylindrical, prismatic, pouch, or coin-type batteries, and the like depending on their shape. FIGS. 2 to 5 are schematic views illustrating a rechargeable lithium battery according to

an example embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12 connected to the positive lead tab 11, a negative lead tab 21, and a negative terminal 22 connected to the negative lead tab 21. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

According to an example embodiment of the present disclosure, a rechargeable lithium battery may include an electrode, a separator, and an electrolyte solution. For example, a rechargeable lithium battery according to one example embodiment may include a positive electrode including a positive electrode active material, a negative electrode including a negative electrode active material, and a separator and an electrolyte solution interposed between the positive electrode and the negative electrode. At least one of the positive electrode or the negative electrode may be an electrode to be described below, and as an example, the positive electrode may be the electrode to be described below.

## Electrode for Rechargeable Lithium Battery

Hereinafter, an electrode according to example embodiments of the present disclosure is described in more detail.

FIG. 6 is a cross-sectional view of an electrode for a rechargeable lithium battery according to example embodiments of the present disclosure.

Referring to FIG. 6, the electrodes 10 and 20 may include an electrode collector COL and an active material layer AML positioned on the electrode collector COL.

The electrode current collector COL may include the current collector COL1 or the current collector COL2 described above.

For example, as the electrode current collector (COL), one of a copper foil, a nickel foil, a stainless-steel foil, a titanium foil, a nickel foam, a copper foam, a polymer substrate coated with a conductive metal, and a combination thereof can be used.

In an example embodiment, Al may be used as the electrode current collector COL, but the electrode current collector COL is not limited thereto.

The active material layer AML may include a first active material layer ATL1 disposed on the electrode current collector COL and a second active material layer ATL2 disposed on the first active material layer ATL1.

The first active material layer ATL1 may have a thickness TKL1, and the second active material layer ATL2 may have a thickness TKL2.

The thickness TKL of the active material layer AML may be the sum of the thickness TKL1 of the first active material layer ATL1 and the thickness TKL2 of the second active material layer ATL2.

The thickness TKL of the active material layer AML may be in a range of ≥ 10 μm to ≤ 170 μm. For example, the thickness TKL of the active material layer AML may be in a range of ≥ 10 μm or more, ≥ 11 μm or more, ≥ 15 μm or more, ≥ 20 μm or more, ≥ 30 μm or more or ≥ 40 μm or more. For example, the thickness TKL of the active material layer AML may be in a range of 170 μm or less, 160 μm or less, 150 μm or less, 140 μm or less, 130 μm or less, 120 μm or less, 110 μm or less, 100 μm or less, 90 μm or less, 80 μm or less, 70 μm or less, 60 μm or less or 50 μm or less. When the thickness TKL of the active material layer AML satisfies the above-described range, a change in the volume of the battery during charging and discharging can be reduced or minimized, and a battery having a long lifetime can be realized.

The thickness TKL1 of the first active material layer ATL1 may be in a range of ≥ 10 μm to ≤ 120 μm. For example, the thickness TKL1 of the first active material layer ATL1 may be in a range of ≥ 15 μm or more, ≥ 20 μm or more, ≥ 30 μm or more or ≥ 40 μm or more. For example, the thickness TKL1 of the first active material layer ATL1 may be in a range of ≤90 μm or less, ≤80 μm or less, ≤70 μm or less, ≤60 μm or less, ≤50 μm or less or 40 μm or less.

The thickness TKL2 of the second active material layer ATL2 may be in a range of 10 μm to 120 μm. For example, the thickness TKL2 of the second active material layer ATL2 may be in a range of 15 μm or more, 20 μm or more 30 μm or more or 40 μm or more. For example, the thickness TKL2 of the second active material layer ATL2 may be in a range of 90 μm or less, 80 μm or less 70 μm or less 60 μm or less 50 μm or less or 40 μm or less.

When the thickness TKL1 of the first active material layer ATL1 and the thickness TKL2 of the second active material layer ATL2 satisfy the above-described ranges, a change in the volume of the battery during charging and discharging can be reduced or minimized, and a battery having a long lifetime can be realized.

In an example embodiment, TKL1 may increase as the weight of the active material included in the first active

material layer ATL1 increases. In an example embodiment, as the amount of the active material included in the second active material layer ATL2 increases, TKL2 may increase.

The thickness ratio (TKL1:TKL2) of the first active material layer ATL1 to the second active material layer ATL2 may be in a range of ≥ 3:7 to ≤ 7:3. For example, the thickness ratio (TKL1:TKL2) of the first active material layer ATL1 to the second active material layer ATL2 may be equal to 5:5. When the thickness ratio (TKL1:TKL2) of the first active material layer ATL1 and the second active material layer ATL2 satisfies the above-described range, the binding force of the active material layer AML to the electrode current collector COL is improved, so that the capacity and energy density of the battery can be improved or maximized, and the ease of processing the electrode can be achieved.

FIG. 7 is an enlarged view for illustrating an electrode according to example embodiments of the present disclosure. That is, FIG. 7 is an enlarged view in which the region "M" in FIG. 6 is enlarged.

Referring to FIG. 7, the first active material layer ATL1 may include a first active material CAM1, a binder BND, and a conductive material CDM.

As the first active material CAM1 may be or include a compound capable of reversible intercalation and deintercalation of lithium (a lithiated intercalation compound). The first active material CAM1 may include a lithium composite oxide represented by the following chemical formula 2.

Chemical formula 2: $Li_{x4}M^1_yM^2_zM^3_{1-y-z}O_{2-a}X_a$

Wherein in the chemical formula 2:

$$0.5 \leq x4 \leq 1.8,\ 0 \leq a \leq 0.05,\ 0 < y \leq 1,\ 0 \leq z \leq 1, \text{ and } 0 \leq y+z \leq 1,$$

$M^1$, $M^2$ and $M^3$ may each independently include one or more elements including metals such as at least one of Ni, Co, Mn, Al, B, Ba, Ca, Ce, Cr, Fe, Mo, Nb, Si, Sr, Mg, Ti, V, W, Zr or La, and combinations thereof,

X may include one or more elements such as or including at least one of F, S, P, or Cl.

In an example embodiment in the above chemical formula 2, $M^1$ is or includes Ni, and may be $0.8 \leq y \leq 1$, and $0 \leq z \leq 0.2$. For example, as the first active material CAM1 may include LMFP ($LiFePO_4$, lithium manganese iron phosphate), NMX (nickel manganese oxide, $NiMnO_2$), NCA ($LiNiCoAlO_2$, lithium nickel cobalt aluminum), or NCM ($LiNiCoMnO_2$, lithium nickel cobalt manganese).

The binder BND may adhere the particles of the first active material CAM1 to each other, and adhere the first active material CAM1 to the electrode current collector COL. For example, the binder BND may include at least one of a rubber binder, an acrylate binder, a polyvinylidene fluoride binder, a polyvinylpyrrolidone binder, an acetate binder, a polyethylene alcohol binder, a cellulose binder, but is not limited thereto.

The rubber-based binder may include, for example, at least one of styrene-butadiene rubber (SBR), nitrile-butadiene Rubber (NBR), hydrogenated nitrile butadiene rubber (HNBR), ethylene propylene diene monomer rubber (EPDM) or a combination thereof.

The acrylate-based binder may include, for example, at least one of polyacrylic acid (PAA), polymethyl methacrylate, polyisobutyl methacryrate, polyethyl acrylate, polybutyl acrylate, poly (2-ethylhexyl acrylate) or a combination thereof.

The polyvinylidene fluoride-based binder may include, for example, at least one of polyvinylidenes fluoride, polyvinyidenes fluoride-co-hexafluoropropylene, polyvinylidnes fluorides-co-trichloroethylene, polyvinyidines fluoride-co-tetrafluoroethylene, polyvinylidenes fluorid-co-trifluoroethylene, poly vinylidenes fluoriide-co-trifluorochloroethylene, poly (vinylidene)fluoride-co-hexafluoropropylene (PVdF), poly (vinyridene)fluoride-co-trichloroethylene, or a combination thereof.

The polyvinylpyrrolidone-based binder may include, for example, polyvinyl pyrrolidone.

The nitrile-based binder may include, for example, at least one of polyacrylonitrile, an acrylonitrilestyrene-butadiene copolymer or a combination thereof.

The acetate-based binder may include, for example, at least one of polyvinylacetate, ethylene-co-vinyl acetate, cellulose acetate, cellulose acetate butyrate, cellulose acetate propionate, or a combination thereof.

The polyvinyl alcohol-based binder may include, for example, polyvinyl alcohol.

The cellulose-based binder may include, for example, at least one of carboxymethyl cellulose (CMC), methyl cellulose (MC), hydroxypropyl cellulose (HPC), methyl hydroxypropylcellulose (MHPC), ethyl hydroxyethyl cellulose (EHEC), methyl ethyl hydroxyethylene cellulose (MEHEC), cellulose gum, or a combination thereof.

The conductive material CDM imparts conductivity to the electrodes 10 and 20, and any material can be used as long as the material is an electron conductive material that does not cause a chemical change in the battery, and examples

thereof include carbon-based materials such as at least one of natural graphite, artificial graphite, carbon black, acetylene black, Ketjen black, carbon fiber, carbon nanofiber, and carbon nanotube; metal-based materials such as a metal powder or a metal fiber of at least one of copper, nickel, aluminum, silver, or the like; conductive polymers such as polyphenylene derivatives; and conductive materials containing a mixture thereof.

According to an example embodiment, the amount of the first active material CAM1 may be in a range of ≥ 90 wt % to ≤ 99.5 wt % with respect to the total weight of the first active materials layer ATL1. According to an example embodiment, the amount of the binder BND may be in a range of ≥ 0.1 wt% to ≤ 5 wt% with respect to the total weight of the first active material layer ATL1. According to an example embodiment, the amount of the conductive material CDM may be in a range of ≥ 0.1 wt% to ≤ 5 wt% with respect to the total weight of the first active material layer ATL1.

When the first active material layer ATL1 satisfies the above conditions of the range of the amount of the first active material CAM1, the range of the amount of the binder BND, and the range of the amount of the conductive material CDM, the capacity and energy density of the battery can be improved or maximized.

The second active material layer ATL2 may be in contact with one surface of the first active material layer ATL1. One surface of the first active material layer ATL1 may be a surface that does not contact the electrode current collector (FIG. 6, COL). For example, in the electrodes 10 and 20, the electrode current collector (FIG. 6, COL), the first active material layer ATL1, and the second active material layer ATL2 may be stacked, e.g., sequentially stacked.

The second active material layer ATL2 may include a second active material CAM2 and a composite conductive material CCM.

The second active material CAM2 may be the same as the first active material CAM1 described above in the first active material layer ATL1. For example, the second active material CAM2 may include the lithium composite oxide represented by the above-described chemical formula 2.

In the composite conductive material (CCM), binder migration may not occur on the surface of the active material layer, and a flow path of lithium ions can be secured.

The composite conductive material (CCM) may include a carbon nanostructure and an adhesive polymer physically or chemically bonded to a surface of the carbon nanostructure. Chemical bonding refers to bonding to each other by an ionic bond or a covalent bond. The physical bond indicates that the components are simply mixed, and the chemical properties of the components do not change.

As an example, the composite conductive material (CCM) according to examples of the present disclosure may have a structure in which a carbon nanostructure and an adhesive polymer are chemically bonded, but is not limited thereto.

By using the composite conductive material (CCM) in which a chemical bond is formed between the carbon nanostructure and the adhesive polymer, the carbon nanostructure can be dispersed without agglomeration. As a result, the composite conductive material (CCM) improves dispersibility and can form a conductive path even with a small amount, so that the capacity can be increased. In addition, even when the active material expands and contracts due to charging and discharging during battery driving, there is substantially no phenomenon such as agglomeration occurring due to movement of the carbon nanostructure. When the composite conductive material (CCM) is used, the binder ratio is reduced, and the voids in the electrode plate are ensured, so that the flow path of $Li^+$ ions is ensured, thereby reducing the deterioration in the thickness direction of the electrode plate due to charging and discharging, and improving the life and rate characteristics.

The carbon nanostructure may include a carbon material having a chain form or an elongated form, which has desired or improved mechanical strength, thermal conductivity, and chemical stability, as well as electrical conductivity.

The carbon nanostructure can be produced by a conventional general production method, and for example, can be produced by, e.g., an arc discharge method, laser ablation, chemical vapor deposition, high pressure carbon monoxide separation (HIPCO), or the like.

The carbon nanostructures may have a diameter in the nanometer range. The carbon nanostructures may have a length in the micrometer range. For example, the diameter of the carbon nanostructure may be in a range from ≥ 5 nm to ≤ 100 nm, from ≥ 15 nm to ≤ 90 nm, from ≥ 20 nm to ≤ 80 nm, or from ≥ 30 nm to ≤ 70 nm. The length of the carbon nanostructure may be in a range from ≥ 10 μm to ≤ 100 μm, from ≥ 15 μm to ≤ 90 μm, from ≥ 20 μm to ≤ 80 μm, or from ≥ 30 μm to ≤ 70 μm.

As an example, the carbon nanostructure may include at least one of carbon nanotubes (CNT), carbon nanofibers (CNF), polyacetylene, graphene nanoribbons (GNR), graphene sheets, fullerenes, nanodiamonds, mesoporous carbon, amorphous carbon, carbon quantum dots, nanoporous carbon, carbon black, nanohorns, and vitreous carbon. As an example, the carbon nanostructure may include carbon nanotubes (CNT). The carbon nanotube (CNT) may include a single-wall (SWCNT) structure or a multi-wall (MWCNT), structure.

The adhesive polymer may include an organic binder that dissolves in an organic solvent. The organic binder has an advantage of being able to achieve various properties such as adhesive force, tensile strength, and elasticity. The adhesive polymer can be used without limitation as long as the adhesive polymer is a polymer capable of realizing an organic binder.

Although the molecular weight of the adhesive polymer is not limited, the adhesive polymer may have functional groups such as at least one of a hydroxyl group, a carboxyl group, or an amine group, and the adhesive polymer may be compatible with the active material and other additives in the electrode composition, so that there is no or little issue in preparing the slurry. In addition, the adhesive polymer may have electrochemically stable properties in the charging or discharging process of the lithium battery.

The adhesive polymer may include at least one of polyvinyl alcohol (PVA), polyacrylonitrile (PAN), polyacrylic acid (PAA), polyethylene (PE), polyethylene glycol (PEG), polyimide (PI), polyacrylamide (PAM), polystyrene (PS), polyurethane (PU), polyvinylbutral (PVB), polyvinylpyrrolidine (PVP), and copolymers thereof. The adhesive polymers may be used singly or in combination of two or more adhesive polymers.

According to an example embodiment, the adhesive polymer may include at least one of a first structural unit represented by the following chemical formula 1-1 and a second structural unit represented by a following chemical formula 1-2.

Chemical formula 1-1:

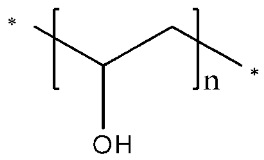

Chemical formula 1-2:

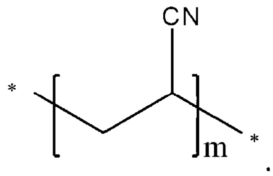

In chemical formulas 1-1 and 1-2, n and m may each be an integer of in a range of 1 to 100.

For example, the first structural unit may be derived from polyvinyl alcohol (PVA). For example, the second structural unit may be derived from polyacrylonitrile (PAN).

As an example, the adhesive polymer may include at least one of a polyvinyl alcohol-polyacrylonitrile (PVA-PAN) copolymer, a polyvinylalcohol-polyethylene glycol (PVA-PEG) copolymer, and a polyacrylic acid-polyacrylnitrile (PAA-PAN) copolymer.

A weight of the adhesive polymer is in a range of ≥ 0.1 wt% to ≤ 80 wt%, based on 100 wt% of a total amount of the composite conductive material (CCM). When the amount of the adhesive polymer in the composite conductive material (CCM) exceeds the above-described range, the resistance inside the electrode may be increased by acting as a resistor. When the amount of the adhesive polymer in the composite conductive material (CCM) is less than the above-described range, a trace amount of the polymer may not evenly distribute the electrode material, and thus the performance of the battery may be deteriorated.

According to an example embodiment, the second active material layer ATL2 may not include the binder BND or the conductive material CDM used in the first active material layer ATL1. That is, the amount of the binder BND or the conductive material CDM in the second active material layer ATL2 may be equal to 0.

According to another example embodiment, the second active material layer ATL2 may include a small amount of a binder BND or a conductive material CDM that is separated from the composite conductive material CCM. For example, the amount of the binder BND in the second active material layer ATL2 may be in a range of ≥ 0.1 wt% or less, and the amount of the conductive material CDM may be in a range of ≥ 0.1 wt% or less. That is, because the binder BND or the conductive material CDM may be included in the second active material layer ATL2 in a very small amount, it may be considered that the binder BND or the conductive material (CDM) is substantially omitted.

The binder BND and the conductive material CDM in the first active material layer ATL1 may be formed of or include an additive of the first active material layers ATL1. The second active material layer ATL2 may include a composite conductive material CCM corresponding to a role of an additive in the first active material layer APL1.

The amount of the additive in the first active material layer ATL1 may be greater than the amount of the composite conductive material CCM in the second active material layer ATL2. Because the composite conductive material (CCM) includes a structure in which a carbon nanostructure and an adhesive polymer are closely bonded to each other,

conductivity and adhesiveness can be improved or maximized even in a small amount.

According to an example embodiment, the amount of the additive in the first active material layer ATL1 may be in a range of 1 to 3 times greater than the amount of the composite conductive material CCM in the second active material layer ATL2.

According to an example embodiment, the porosity of the second active material layer ATL2 may be greater than the porosity of the first active material layer ATL1. For example, the porosity of the first active material layer ATL1 may be in a range of ≥ 10% to 30%, and the porosities of the second active material layer ATL2 may be in a range of ≥ 15% to 40%.

Porosity: The porosity of the active material layer may be determined by a volume-based density method or by mercury intrusion porosimetry.

The porosity (%) is calculated according to Equation (2) based on the total volume (V) and solid volume (Vs):

$$\text{Porosity (\%)} = [(V - Vs) / V] \times 100 \qquad \text{[Equation 2]}$$

where Vs is the solid volume calculated from the measured mass and theoretical density. Alternatively, the cumulative pore volume obtained by mercury intrusion porosimetry may be used.

Instead of using a binder (BND) and a conductive material (CDM), the second active material layer ATL2 may use a composite conductive material (CCM) in which a carbon nanostructure and an adhesive polymer are integrated to have a relatively larger porosity than the first active material layer ATL1.

Accordingly, because the movement path of the lithium ions in the second active material layer ATL2 is shortened, the movement of the lithium ions within the second active material layers ATL2 may be facilitated. In other words, the ion conductivity of the second active material layer ATL2 may be improved.

On the other hand, in the first active material layer ATL1, the binder BND is substantially evenly dispersed in the first active materials layer ATL1, and thus may have a relatively large adhesive force compared to the second active material layer ATL2, and a relatively small porosity compared to the second actively material layer ATL2.

According to an example embodiment, the amount of the second active material CAM2 may be in a range of ≥ 90 wt % to ≤ 99.5 wt % with respect to the total weight of the second active materials layer ATL2. When the second active material layer ATL2 satisfies the amount range condition of the second active material CAM2, the capacity and energy density of the battery can be improved or maximized, and at the same time, the ease of processing the electrode plate can be achieved.

According to an example embodiment, the amount of the composite conductive material CCM may be in a range of ≥ 0.5 wt% to ≤ 5 wt% with respect to the total weight of the second active material layer ATL2. When the amount of the composite conductive material CCM in the second active material layer ATL2 exceeds the above-described range, the resistance of the electrode may increase, and the stability of the battery and the performance of the battery may decrease. When the composite conductive material CCM is not included in the second active material layer ATL2, or the amount of the composite conductive material CCM in the second active materials layer ATL2 is less than the above-described range, it may be challenging to improve or maximize the effect of improving ion conductivity.

FIG. 8 is an enlarged view illustrating an electrode according to another example embodiment of the present disclosure. FIG. 9 is an enlarged view in which the "N" region in FIG. 8 is enlarged. In the present example embodiment, a detailed description of technical features overlapping those described above with reference to FIG. 6 and FIG. 7 is omitted, and differences therewith are described in detail.

Referring to FIGS. 8 and 9, the electrodes 10' and 20' according to another example embodiment of the present disclosure may include a single-layer active material layer AML'.

The electrodes 10' and 20' may include an electrode collector COL' and an active material layer AML' positioned on the electrode collector COL'.

In an example embodiment, Al may be used as the electrode current collector COL', but the electrode current collector COL' is not limited thereto.

The active material layer AML' may be in contact with one surface of the electrode current collector COL'. The one surface of the active material layer AML' may be a surface where the active material layer AML' is in contact with the electrode current collector COL'. For example, in the electrodes 10' and 20', the electrode current collector COL' and the active material layer AML' may be stacked, e.g., sequentially stacked together.

The active material layer AML' is provided on the electrode current collector COL' and may have a thickness TKL'. For example, the thickness TKL' of the active material layer AML' may be in a range of ≥ 10 μm to ≤ 170 μm.

Referring to FIG. 9, the active material layer AML' may include an active material CAM', a composite conductive material CCM', a binder BND', and a conductive material CDM'.

The active material CAM' may be the same as the first active material CAM1 or the second active material CAM2 described above. The binder BND' may be the same as the binder BND described above. The conductive material CDM' may be the same as the conductive material CDM described above. The composite conductive material CCM' may be the

same as the composite conductive material CCM described above.

According to an example embodiment, the amount of the active material CAM' may be in a range of ≥ 90 wt % to ≤ 99.5 wt % with respect to the total weight of the active material layer AML'. According to an example embodiment, the amount of the binder BND' may be in a range of ≥ 0.5 wt% to ≤ 5 wt% with respect to the total weight of the active material layer AML'. According to an example embodiment, the amount of the conductive material CDM' may be ≥ 0.1wt% to ≤ 5wt% with respect to the total weight of the active material layer AML'. According to an example embodiment, the amount of the composite conductive material CCM' may be ≥ 0.1wt% to ≤ 5wt% with respect to the total weight of the active material layer AML'.

When the active material layer AML' satisfies the conditions of the range of the amount of the active material CAM', the range of the amount of the binder BND', and the range of the amount of the conductive material CDM' , and the range of the amount of the composite conductive material CCM', it is possible to improve or maximize the capacity and energy density of the battery.

The active material layer AML' may include a first portion RG1 adjacent to the electrode current collector COL', and a second portion RG2 adjacent to a surface of the active material layer AML'. For example, the first portion RG1 may be or include a region where the active material layer AML' is in contact with the electrode current collector COL'. The second portion RG2 may be or include a region where the active material layer AML' is not in contact with the electrode current collector COL'.

The first portion RG1 of the active material layer AML' may include an active material CAM', a binder BND', and a conductive material CDM'. The second portion RG2 of the active material layer AML' may include the active material CAM' and the composite conductive material CCM'. That is, the composite conductive material CCM' may be included only in the second portion RG2 of the active material layer AML'.

According to an example embodiment, in the second portion RG2, the active material CAM' and the composite conductive material CCM' may be included at a weight ratio in a range of 99.5:0.5.

When the composite conductive material CCM' is not included in the second portion RG2, or the amount of the composite conductive material CCM' is out of the above-described range, it may be challenging to improve or maximize the ion conductivity improvement effect.

In the electrodes 10' and 20' according to an example embodiment, when the active material layer AML' is present as a single layer, by adding the composite conductive material CCM' to the second portion RG2, it is possible to improve the junction between the electrode current collector COL' and the active material layer AML', and secure a flow path of lithium ions on the surface of the active material layer.

## Method for Producing Electrode

FIG. 10 is a diagram for describing a method of manufacturing an electrode according to an example embodiment of the present disclosure.

Referring to FIG. 10, a method of manufacturing an electrode according to an example embodiment of the present disclosure may include providing an electrode current collector COL, forming a first active material layer ATL1 on the electrode current collector COL, and forming a second active material layer ATL2 on the first active material layer ATL1.

In an example embodiment, the first active material layer ATL1 may include the first active material CAM1, the binder BND, and the conductive material CDM described above with reference to FIG. 7. The second active material layer ATL2 may include the second active material CAM2 and the composite conductive material CCM described above with reference to FIG. 7.

Since each of, or at least one of, the electrode current collector COL, the first active material layer ATL1, and the second active material layer ATL2 has the same configuration as the configuration of the electrodes 10 and 20 according to the above-described example embodiments, detailed description thereof is omitted below.

The composite conductive material (CCM) may include a carbon nanostructure and an adhesive polymer physically or chemically bonded to a surface of the carbon nanostructure.

The carbon nanostructure may include at least one of carbon nanotubes (CNT), carbon nanofibers (CNF), polyacetylene, graphene nanoribbons (GNR), graphene sheets, fullerenes, nanodiamonds, mesoporous carbon, amorphous carbon, carbon quantum dots, nanoporous carbon, carbon black, nanohorns, and vitreous carbon.

As an example, the carbon nanostructure may include carbon nanotubes (CNT).

The adhesive polymer may include at least one of polyvinyl alcohol (PVA), polyacrylonitrile (PAN), polyacrylic acid (PAA), polyethylene (PE), polyethylene glycol (PEG), polyimide (PI), polyacrylamide (PAM), polystyrene (PS), polyurethane (PU), polyvinylbutral (PVB), and polyvinylpyrrolidine (PVP).

As an example, the adhesive polymer may include at least one of a polyvinyl alcohol-polyacrylonitrile (PVA-PAN) copolymer, a polyvinylalcohol-polyethylene glycol (PVA-PEG) copolymer, and a polyacrylic acid-polyacrylnitrile (PAA-PAN), copolymer.

Preparing a composite conductive material (CCM) may include introducing a functional group onto a surface of a

carbon nanostructure mixing an adhesive polymer with the functionalized carbon nanostructure to prepare a mixture, and stirring and heat treating the mixture.

FIG. 11 is a schematic view showing a process for producing a composite conductive material chemically bonded to an adhesive polymer of the present disclosure. The method for producing a composite conductive material is for example described below with reference to FIG. 11.

The carbon nanostructure may include a pretreatment process of introducing functional groups such as carboxyl groups (-COOH) or hydroxyl groups (-OH) on the surface of the carbon nanostructure for chemical modification.

Introducing the functional group may include a pretreatment step using at least one of a wet treatment using a strong acid, a plasma treatment, and a dry treatment using vacuum ultraviolet irradiation.

Preparing the mixture can include mixing the adhesive polymer with the functionalized carbon nanostructure. For example, the prepared mixture may be or include a mixture obtained by adding carbon nanostructures to a solvent containing an adhesive polymer. The resulting mixture may undergo a chemical reaction to induce a chemical bond.

The mixture may be subjected to stirring and heat treatment for chemical reaction. In one example, the stirring and heat treating can be performed at a temperature in the range of $\geq$ 60°C to $\leq$ 90°C.

In one example, the mixture may further include a crosslinking agent and a catalyst for activation of the chemical reaction.

Finally, the mixture after the reaction is dried to produce a composite conductive material (CCM) in which the carbon nanostructure and the adhesive polymer are chemically bonded.

According to another example embodiment, a composite conductive material (CCM) may be prepared by mixing an adhesive polymer and a carbon nanostructure having a functional group to prepare a mixture, and then vaporizing or gelling the mixture to induce natural arrangement of the carbon nanostructure and the adhesive polymer by self-assembly. In a composite conductive material (CCM) manufactured by self-assembly, carbon nanostructures can be arranged between adhesive polymer chains to form a specific structure.

When a carbon nanostructure having a functional group introduced therein is simply mixed with an adhesive polymer and used as a composite conductive material (CCM), a chemical bond is less likely to be induced therebetween in an electrode manufacturing process, and even if a physical bond is induced therebetween, the binding force is lower than the binding force of the chemical bond, and thus the effect of reducing or suppressing aggregation of the carbon nanostructure may be poor. Herein, the physical bonding means that the components are simply mixed and the chemical properties of the components do not change.

According to an example embodiment, the composite conductive material (CCM) may form a chemical bond between the carbon nanostructure and the adhesive polymer to improve the dispersibility of the carbon nanostructure, thereby forming a conductive path even in a small amount. As a result, the amount of the active material in the active material layer can be increased, so that the capacity can be increased. In addition, even when the active material expands and contracts due to charging and discharging during driving of the lithium battery, the conductive path can be maintained without agglomeration of the carbon nanostructure, and the life characteristics of the lithium battery can be improved.

According to an example embodiment, at least one of forming the first active material layer ATL1 and forming the second active material layer ATL2 may include performing a wet process or a dry process. In an example embodiment, the first active material layer ATL1 may be formed by a wet process, and the second active material layer ATL2 may be formed by the dry process. In another example embodiment, the first active material layer ATL1 may be formed by a dry process, and the second active material layer ATL2 may be formed by the dry process. However, the present disclosure is not limited thereto.

In the wet process, the active materials CAM1 and CAM2, the binder BND, the conductive material CDM, and the composite conductive material CCM are mixed in a solvent to prepare an electrode mixture, and the mixture is applied onto the electrode current collector COL, rolled, and dried. The solvent in the slurry may be or include a solvent generally used in the art, and may include, for example, at least one of dimethyl sulfoxide (DMSO), isopropyl alcohol, N-methylpyrrolidone (NMP), acetone, water, and a combination thereof.

In the dry process, the active materials CAM1 and CAM2, the binder BND, the conductive material CDM, and the composite conductive material CCM in a dry state are dry-mixed without a solvent to prepare an electrode mixture, and the mixture is disposed on the electrode current collector COL and rolled.

Subsequently, a roll pressing process, a slitting process, and a notching process may be performed, e.g., sequentially performed, on the positive electrode 10 or the negative electrode 20 manufactured through the above-described process. The positive electrode 10, the separator 30, and the negative electrode 20 are stacked together, and an electrolyte solution ELL is provided, so that the rechargeable lithium battery according to the examples of present disclosure can be manufactured.

FIG. 13 is a flowchart illustrating a method of manufacturing an electrode for a rechargeable lithium battery, according to an example embodiment. In FIG. 13, the method 1300 includes operation 1310, which includes forming a first active material layer on an electrode current collector. Operation 1320 includes forming a second active material layer on the first active material layer. For example, the first active material layer comprises a first active material, a binder, and a

conductive material, and the second active material layer comprises a second active material and a composite conductive material.

In an example, the composite conductive material is prepared by introducing a functional group onto a surface of a carbon nanostructure, and mixing an adhesive polymer with the functionalized carbon nanostructure to prepare a mixture. In another example, the composite conductive material is further prepared by stirring and heat treating the mixture. In yet another example, the composite conductive material comprises the carbon nanostructure and the adhesive polymer bonded to the surface of the carbon nanostructure. In other examples, the introducing the functional group comprises performing at least one of a wet treatment using a strong acid, a plasma treatment, or a dry treatment using vacuum ultraviolet irradiation.

For example, the functional group comprises at least one of a carboxyl group (-COOH) and a hydroxyl group (-OH). In yet other examples, the carbon nanostructure comprises at least one of carbon nanotubes (CNT), carbon nanofibers (CNFs), polyacetylene, graphene nanoribbons (GNRs), graphene sheet, fullerenes, nanodiamonds, mesoporous carbon, amorphous carbon, carbon quantum dots, nanoporous carbon, carbon black, nanohorns, or vitreous carbon, and the adhesive polymer comprises at least one of polyvinyl alcohol (PVA), polyacrylonitrile (PAN), polyacrylic acid (PAA), polyethylene (PE), polyethylene glycol (PEG), polyimide (PI), polyacrylamide (PAM), polystyrene (PS), polyurethane (PU), polyvinylbutral (PVB), and polyvinylpyrrolidine (PVP). In a further example, the adhesive polymer comprises at least one of a first structural unit represented by the following chemical formula 1-1, or a second structural unit represented by the following chemical formula 1-2:

Chemical formula 1-1:

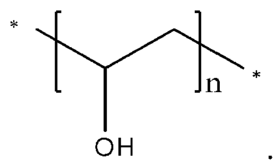

Chemical formula 1-2:

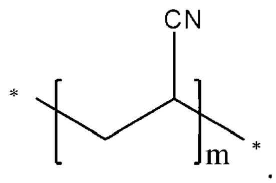

In chemical formulas 1-1 and 1-2, n and m are each an integer in a range of 1 to 100.

The following Examples and Comparative Examples are provided in order to highlight characteristics of disclosure one or more example embodiments, but it is understood that the Examples and Comparative Examples are not to be construed as limiting the scope of the disclosed example embodiments, nor are the disclosure Comparative Examples to be construed as being outside the scope of the example embodiments. Further, it is understood that the example embodiments are not limited to the particular details described in the Examples and Comparative Examples.

**Example 1: Manufacture of an Electrode Including a Double Active Material Layer**

1) Preparation of Composite Conductive Material

2 g of multi-walled CNT having a diameter of about 1 nm and a length of about 25 μm were pretreated with 300 ml of a 20 wt % nitric acid solution at 40°C. for 24 hours. Next, 1 g of the treated CNT was immersed in 200 ml of a solution obtained by mixing concentrated sulfuric acid and concentrated nitric acid at 3:1 (v/v %), ultrasonicated at room temperature for 3 hours, and then stirred at 70°C for 6 hours. Thereafter, the acid solution on the CNT was cleanly removed by filtering and washing with pure water several times, and then dried in a vacuum oven at 80°C. for 24 hours to prepare CNT into which carboxyl groups (-COOH) were introduced.

In a reaction vessel, 3 g of the adhesive polymer and 27 g of anhydrous DMAc (dimethyl acetamide) were mixed, and the mixture was stirred and heated at 100°C for 6 hours under a nitrogen atmosphere to completely dissolve the

adhesive polymer in DMAc. As the adhesive polymer, a PVA-PAN (polyvinyl alcohol-polyacrylonitrile) copolymer was used.

Subsequently, the reaction vessel was cooled to room temperature, and 30 g of the CNT into which the carboxyl group had been introduced was added thereto, followed by ultrasonication for 10 minutes and stirring for 1 hr. Then, the temperature of the reaction vessel was raised, and the mixture was stirred and reacted at 90°C. for 24 hours. After the reaction was completed, the solution in the reaction vessel was poured into 200 ml of ethyl alcohol solution to precipitate the reaction product, followed by filtering, washing, and drying to prepare a composite conductive material in which an adhesive polymer was bonded to the surface of CNTs.

2) Preparation of Positive Electrode Slurry

The positive electrode active material, the conductive material, and the binder were dispersed in N-methylpyrrolidone at a weight ratio of 100:0.2:0.9 to prepare a first active material slurry.

The positive electrode active material and the composite conductive material prepared above were dispersed in N-methylpyrrolidone at a weight ratio of 100:1 to prepare a second active material slurry.

In Example 1, $LiNiCoAlO_2$ was used as the positive electrode active material, carbon nanotubes (CNT) were used as the conductive material, and polyvinylidene fluoride (PVdF) was used as the binder.

3) Positive Electrode Preparation

The prepared first active material slurry was applied to an aluminum (Al) thin film as a positive electrode current collector having a thickness of 12 μm and dried to form a first active material layer having a thickness of about 30 μm. The prepared second active material slurry was applied onto the first active material layer and dried to form a second active material layer having a thickness of about 30 μm. A roll press was performed to produce a positive electrode in which an aluminum current collector; a first active material layer; and a second active material layer were laminated in this order.

4) Production of Rechargeable Lithium Battery

A negative electrode active material slurry was prepared by mixing 98 wt% of a negative electrode active material in which graphite and a Si complex were mixed at a weight ratio of 92:8, 1 wt% of styrene-butadiene rubber (SBR), and 1 wt% of carboxymethyl cellulose (CMC), and charging the mixture into distilled water and stirring the mixture for 60 minutes using a mechanical stirrer. The slurry was applied to a thickness of about 60 μm on a copper current collector having a thickness of 10 μm using a doctor blade, dried in a hot air dryer at 100°C for 0.5 hours, and then dried once again in a vacuum at 120 °C for 4 hours, followed by a roll press to prepare a negative electrode.

An electrolyte solution was prepared by dissolving 1.15 M of $LiPF_6$ in a nonaqueous organic solvent in which ethylene carbonate (EC), ethyl methyl carbonate (EMC), and dimethyl carbonate (DMC) were mixed at a volume ratio of 20:40:40.

The positive electrode, the negative electrode, and a separator made of polyethylene having a thickness of 16 μm were assembled to prepare an electrode assembly, and the electrolyte solution was injected to prepare a rechargeable lithium battery.

**Example 2**

A positive electrode and a rechargeable lithium battery was produced in the same manner as in Example 1, with a difference that the weight ratio of the positive electrode active material and the composite conductive material in the second active material slurry in the production of the positive electrode was set to 100:0.5.

**Example 3**

A positive electrode and a rechargeable lithium battery was produced in the same manner as in Example 1, with a difference that a PVA-PEG (polyvinyl alcohol-polyethylene glycol) copolymer was used as the adhesive polymer in the production of the composite conductive material, instead of the PVA-PAN copolymer.

**Example 4**

A positive electrode and a rechargeable lithium battery was produced in the same manner as in Example 1, with a difference that a PAA-PAN (polyacrylic acid-polyacrylonitrile) copolymer was used as the adhesive polymer in the production of the composite conductive material, instead of the PVA-PAN copolymer.

**Comparative Example 1: Preparation of a Positive Electrode Including a Single-Layered Active Material Layer**

The positive electrode active material, the conductive material, and the binder were dispersed in N-methylpyrrolidone at a weight ratio of 100:0.2:0.9 to prepare a first active material slurry.

In Comparative Example 1, $LiNiCoAlO_2$ was used as the positive electrode active material, carbon nanotubes (CNT) were used as the conductive material, and polyvinylidene fluoride (PVdF) was used as the binder.

The prepared first active material slurry was applied to an aluminum (Al) thin film as a positive electrode current collector having a thickness of 12 μm and dried to form a first active material layer having a thickness of about 30 μm. A roll press was performed to produce a positive electrode in which an aluminum current collector and a first active material layer were laminated in this order.

The positive electrode prepared in Comparative Example 1 was used to prepare a lithium secondary battery in the same manner as in Example 1.

**Comparative Example 2**

A positive electrode and a rechargeable lithium battery were produced in the same manner as in Comparative Example 1, with a difference that in the production of the positive electrode, the composition in the first active material slurry was mixed so that the weight ratio of the positive electrode active material and the composite conductive material was 100:10. In Comparative Example 2, the same composite conductive material as the composite conductive material used in Example 1 was used.

The compositions of the positive electrodes according to the above Examples and Comparative Examples are shown in the following Table 1 below.

Table 1:

| Distinction | | $LiNiCoAlO_2$ Amount (wt %) | CNT Amount (wt %) | PVdF Amount (wt %) | Composite Conductive Material Amount (wt %) |
|---|---|---|---|---|---|
| Example 1 | First Active Material Layer | 100 | 0.2 | 0.9 | - |
| | Second Active Material Layer | 100 | - | - | 1 (CNT-PVA/PAN) |
| Example 2 | First Active Material Layer | 100 | 0.2 | 0.9 | - |
| | Second Active Material Layer | 100 | - | - | 0.5 (CNT-PVA/PAN) |
| Example 3 | First Active Material Layer | 100 | 0.2 | 0.9 | - |
| | Second Active Material Layer | 100 | - | - | 1 (CNT-PVA/PEG) |
| Example 4 | First Active Material Layer | 100 | 0.2 | 0.9 | - |
| | Second Active Material Layer | 100 | - | - | 1 (CNT-PAA/PAN) |
| Comparative Example 1 | First Active Material Layer | 100 | 0.2 | 0.9 | - |
| | Second Active Material Layer | - | - | - | - |
| Comparative Example 2 | First Active Material Layer | 100 | 0.2 | 0.9 | - |
| | Second Active Material Layer | 100 | - | - | 10 (CNT-PVA/PAN) |

**Evaluation Example 1: Confirmation of Composite Conductive Material Structure**

The composite conductive material prepared in Example 1 was photographed with a scanning electron microscope (SEM).

FIG. 12 is an SEM image of the composite conductive material produced in Example 1.

Referring to FIG. 12, when the composite conductive material prepared in Example 1 is observed with a scanning electron microscope (SEM), it can be seen that the adhesive polymer is located within a range of 0.01 μm to 500 μm from the surface of the carbon nanostructure.

**Evaluation Example 2: Evaluation of Adhesion**

Peel strength of the positive electrodes prepared in Examples and Comparative Examples was measured by a

method in accordance with ASTM D3330. The instrument used for the measurement was a universal testing machine (UTM), Instron 3345.

Specifically, the positive electrode plates in which the active material layers were disposed on both surfaces of the current collectors produced in Examples and Comparative Examples were cut into a size of 25 mm×150 mm to prepare 20 specimens each. At room temperature, after the adhesive was coated on the glass substrate, a positive electrode plate was attached onto the adhesive, roll-pressed, and then one end of the positive electrode plate was folded 180 degrees, and then the force applied was measured while pulling at a speed of 100 mm/min in a direction opposite to the one end. The evaluation results are shown in Table 2 below.

Table 2:

| Distinction | Peel Strength [kN/mm] |
|---|---|
| Example 1 | 0.059 |
| Example 2 | 0.065 |
| Example 3 | 0.060 |
| Example 4 | 0.079 |
| Comparative Example 1 | 0.045 |
| Comparative Example 2 | 0.082 |

As shown in Table 2, the peel strength was increased in the positive electrodes of the Examples compared to the positive electrodes of Comparative Examples. Therefore, it was confirmed that the positive electrode of the example had a significantly improved adhesive force between the positive electrode active material layer and the current collector compared to the positive electrode of Comparative Example 1.

**Evaluation Example 3: Evaluation of Charge-Discharge Cycle Characteristics**

The rechargeable lithium batteries prepared in Examples and Comparative Examples were subjected to 300 cycles at 25°C, 0.5 C charge (CC/CV, 4.25 V, 0.05 C Cut-off)/0.5 C discharge (CC, 2.8 V Cut-off) conditions, and then the discharge capacity was measured, and the capacity retention rate was calculated. The results are shown in Table 3 below. The capacity retention rate was calculated according to the following Formula 1.

Capacity retention (%) = (discharge capacity after 300 cycles/initial discharge capacity) x 100 Formula 1:

Table 3:

| Distinction | Capacity Retention (%) |
|---|---|
| Example 1 | 95.7 |
| Example 2 | 96.5 |
| Example 3 | 93.2 |
| Example 4 | 93.7 |
| Comparative Example 1 | 85.6 |
| Comparative Example 2 | 78.2 |

Referring to Table 3 above, it was confirmed that when the electrode according to the examples of the present disclosure was used (Examples 1 to 4), the capacity retention rate according to the charge/discharge cycle at room temperature was improved compared to the electrode according to Comparative Examples.

**Evaluation Example 4: Evaluation of Rapid Charging Characteristics**

The rechargeable lithium batteries prepared in Examples and Comparative Examples were charged at 25°C. with 0.2 C, 0.5 C, 1 C, 2 C, 3 C Constant Current-Constant Voltage (CC-CV), respectively, and then discharged at 1/3 C,

and the rapid charging characteristics were calculated, and the results are shown in Table 4 below. The rapid charging characteristics were calculated according to the following Formula 2.

Rapid charging characteristics (%) = (2C CC charge capacity/0.2 C CC charge capacity) x 100 Formula 2:

Table 4:

| Distinction | Rapid Charging Characteristics (%) |
|---|---|
| Example 1 | 50 % |
| Example 2 | 55 % |
| Example 3 | 51 % |
| Example 4 | 48 % |
| Comparative Example 1 | 35 % |
| Comparative Example 2 | 32% |

Referring to Table 4, in the case of using the electrodes according to the examples of the present disclosure (Examples 1 to 4), it was confirmed that the rapid charging characteristics at room temperature were improved compared to the electrodes according to Comparative Examples.

In the electrode according to examples the present disclosure, the composite conductive material in which the adhesive polymer is bonded to the surface of the carbon nanostructure may be included in the upper active material layer, thereby the life characteristics of the rechargeable lithium battery can be improved.

While the present disclosure has been described with reference to example embodiments, it should be understood that these example embodiments are provided for illustrative purposes only and do not limit the scope of the present disclosure. Various modifications and equivalent arrangements may be made without departing from the spirit and scope of the appended claims. Accordingly, the described embodiments should be regarded as examples rather than limitations of the present disclosure.

## Claims

1. An electrode (10) for a rechargeable lithium battery (100), the electrode (10) comprising:

    an electrode current collector (COL);
    a first active material layer on the electrode current collector (COL); and
    a second active material layer on the first active material layer,
    wherein the first active material layer comprises a first active material, a binder, and a conductive material, and the second active material layer includes a second active material and a composite conductive material, and
    wherein the composite conductive material comprises:
    a carbon nanostructure and an adhesive polymer bonded to a surface of the carbon nanostructure.

2. The electrode (10) as claimed in claim 1, wherein
the carbon nanostructure comprises at least one of carbon nanotubes (CNT), carbon nanofibers (CNFs), polyacetylene, graphene nanoribbons (GNRs), graphene sheet, fullerenes, nanodiamonds, mesoporous carbon, amorphous carbon, carbon quantum dots, nanoporous carbon, carbon black, nanohorns, and vitreous carbon.

3. The electrode (10) as claimed in claim 1 or 2, wherein
the adhesive polymer comprises at least one of polyvinyl alcohol (PVA), polyacrylonitrile (PAN), polyacrylic acid (PAA), polyethylene (PE), polyethylene glycol (PEG), polyimide (PI), polyacrylamide (PAM), polystyrene (PS), polyurethane (PU), polyvinylbutral (PVB), and polyvinylpyrrolidine (PVP).

4. The electrode (10) as claimed in any of the claims 1 to 3, wherein

    the adhesive polymer comprises at least one of a first structural unit represented by the following chemical formula 1-1, and a second structural unit represented by the following chemical formula 1-2:

Chemical formula 1-1:

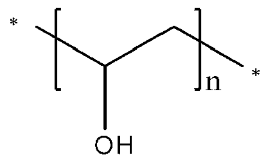

;

Chemical formula 1-2:

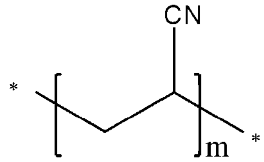

;

wherein n and m are each an integer in a range of ≥ 1 to ≤ 100.

5. The electrode (10) as claimed in any of the claims 1 to 4, wherein a weight ratio of the adhesive polymer is in a range of ≥ 0.1 wt% to ≤ 80 wt%, based on 100 wt% of a total amount of the composite conductive material.

6. The electrode (10) as claimed in any of the claims 1 to 5, wherein the adhesive polymer is located within a range of 500 μm from the surface of the carbon nanostructure.

7. The electrode (10) as claimed in any of the claims 1 to 6, wherein an amount of the composite conductive material in the second active material layer is in a range of ≥ 0.5 wt% to ≤ 5 wt%.

8. The electrode (10) as claimed in any of the claims 1 to 7, wherein

at least one of the first active material and the second active material is represented by the following chemical formula 2,

Chemical formula 2: $Li_{x4}M^1_yM^2_zM^3_{1-y-z}O_{2-a}X_a$

wherein:

$$0.5 \leq x4 \leq 1.8,\ 0 \leq a \leq 0.05,\ 0 < y \leq 1,\ 0 \leq z \leq 1, \text{ and } 0 \leq y+z \leq 1,$$

$M^1$, $M^2$ and $M^3$ each independently comprise one or more of Ni, Co, Mn, Al, B, Ba, Ca, Ce, Cr, Fe, Mo, Nb, Si, Sr, Mg, Ti, V, W, Zr, La, and combinations thereof,
X comprises one or more of F, S, P, or Cl.

9. The electrode (10) as claimed in any of the claims 1 to 8, wherein:

at least one of the first active material and the second active material comprises at least one of LMFP (lithium manganese iron phosphate), NMX (nickel manganese oxide), NCA (lithium nickel cobalt aluminum), or NCM (lithium nickel cobalt manganese),
the conductive material comprises at least one of natural graphite, artificial graphite, carbon black, acetylene black, Ketjen black, carbon fiber, carbon nanofiber, and carbon nanotube, and
the binder comprises at least one of a rubber binder, an acrylate binder, a polyvinylidene fluoride binder, a Polyvinylpyrrolidone binder, an acetate binder, polyvinyl alcohol binder, and a cellulose binder.

10. The electrode (10) as claimed in any of the claims 1 to 9, wherein a porosity of the second active material layer is greater than the porosity of the first active material layer.

11. The electrode (10) as claimed in any of the claims 1 to 10, wherein:

the binder and the conductive material in the first active material layer constitute an additive for the first active material layer, and
an amount of the additive in the first active material layer is in a range of 1 to 3 times greater than an amount of the composite conductive material in the second active material layer.

**12.** The electrode (10) as claimed in any of the claims 1 to 11, wherein the second active material layer is substantially free of a binder.

**13.** A method of manufacturing an electrode (10) for a rechargeable lithium battery (100), the method comprising:

forming a first active material layer on an electrode current collector (COL); and
forming a second active material layer on the first active material layer,
wherein the first active material layer comprises a first active material, a binder, and a conductive material, and the second active material layer comprises a second active material and a composite conductive material, and wherein the composite conductive material is prepared by:

introducing a functional group onto a surface of a carbon nanostructure; and
mixing an adhesive polymer with the functionalized carbon nanostructure to prepare a mixture.

**14.** The method as claimed in claim 13, wherein the composite conductive material is further prepared by stirring and heat treating the mixture.

**15.** The method as claimed in claim 13 or 14, wherein the composite conductive material comprises the carbon nanostructure and the adhesive polymer bonded to the surface of the carbon nanostructure.

FIG. 1

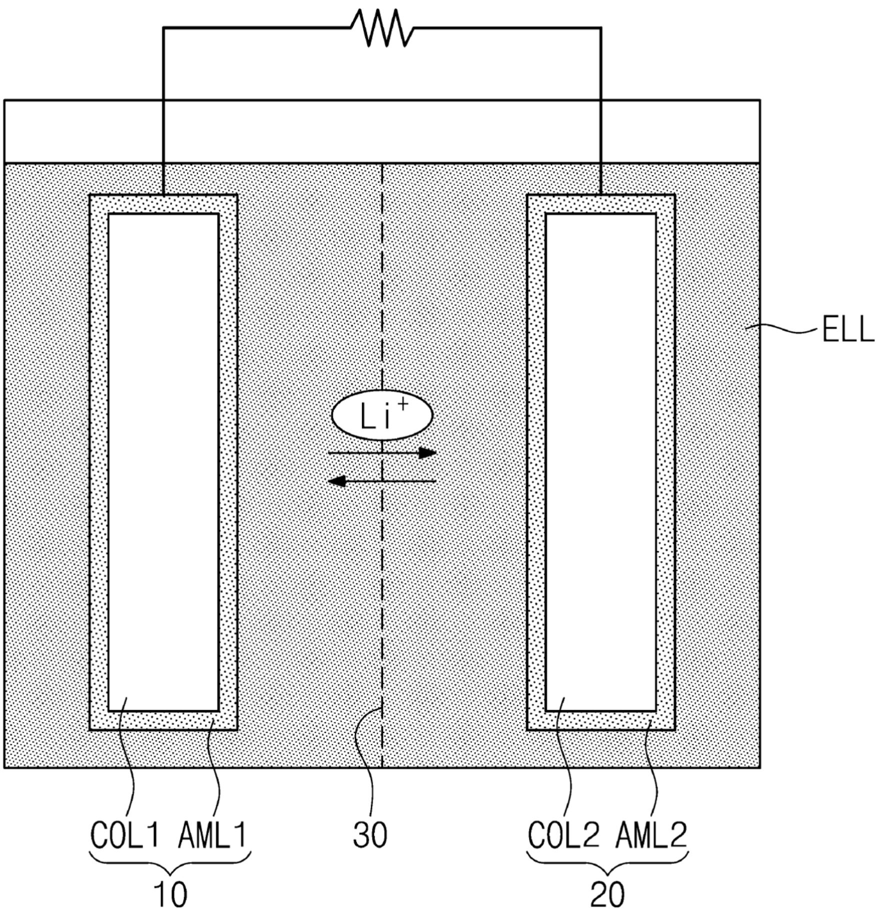

FIG. 2

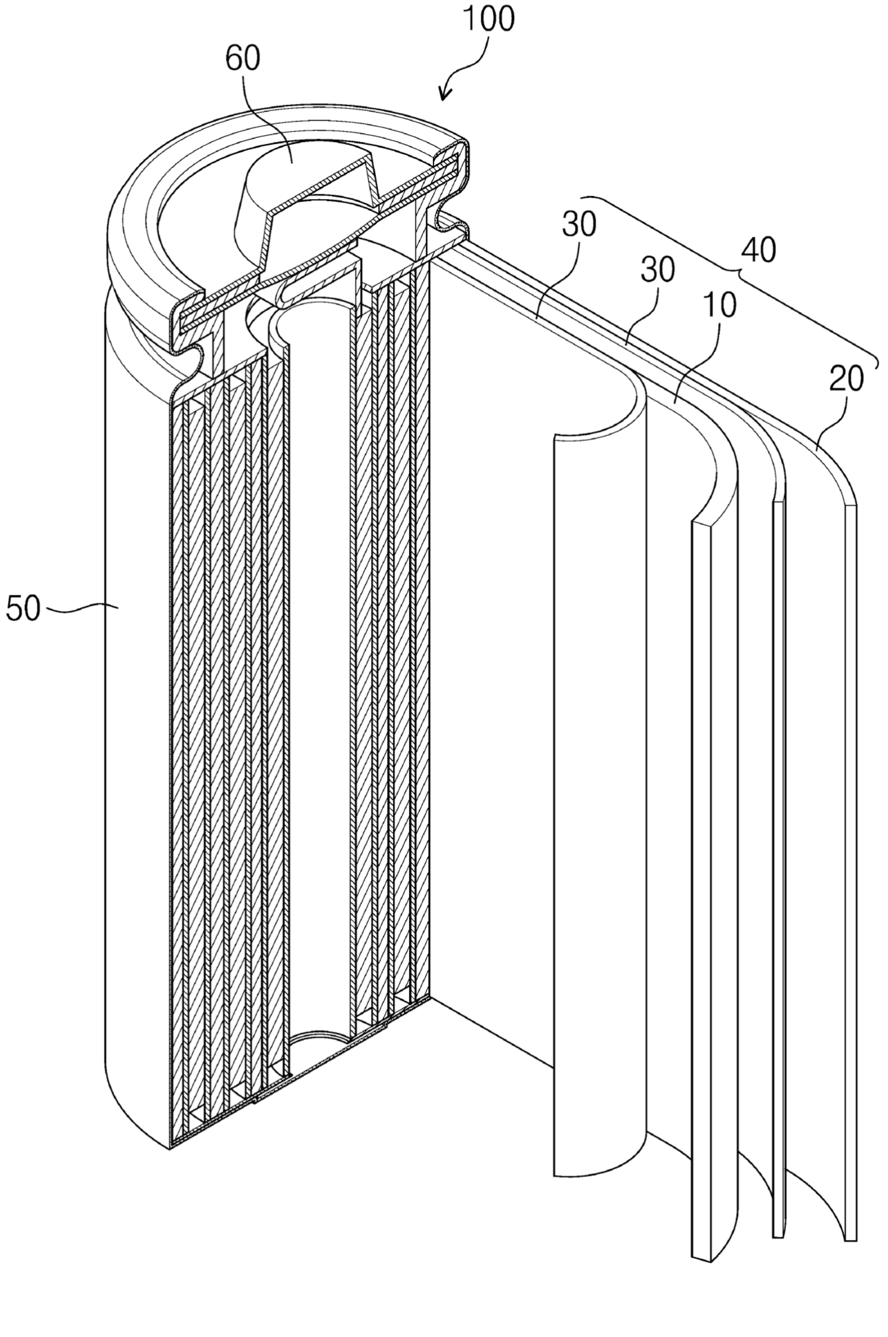

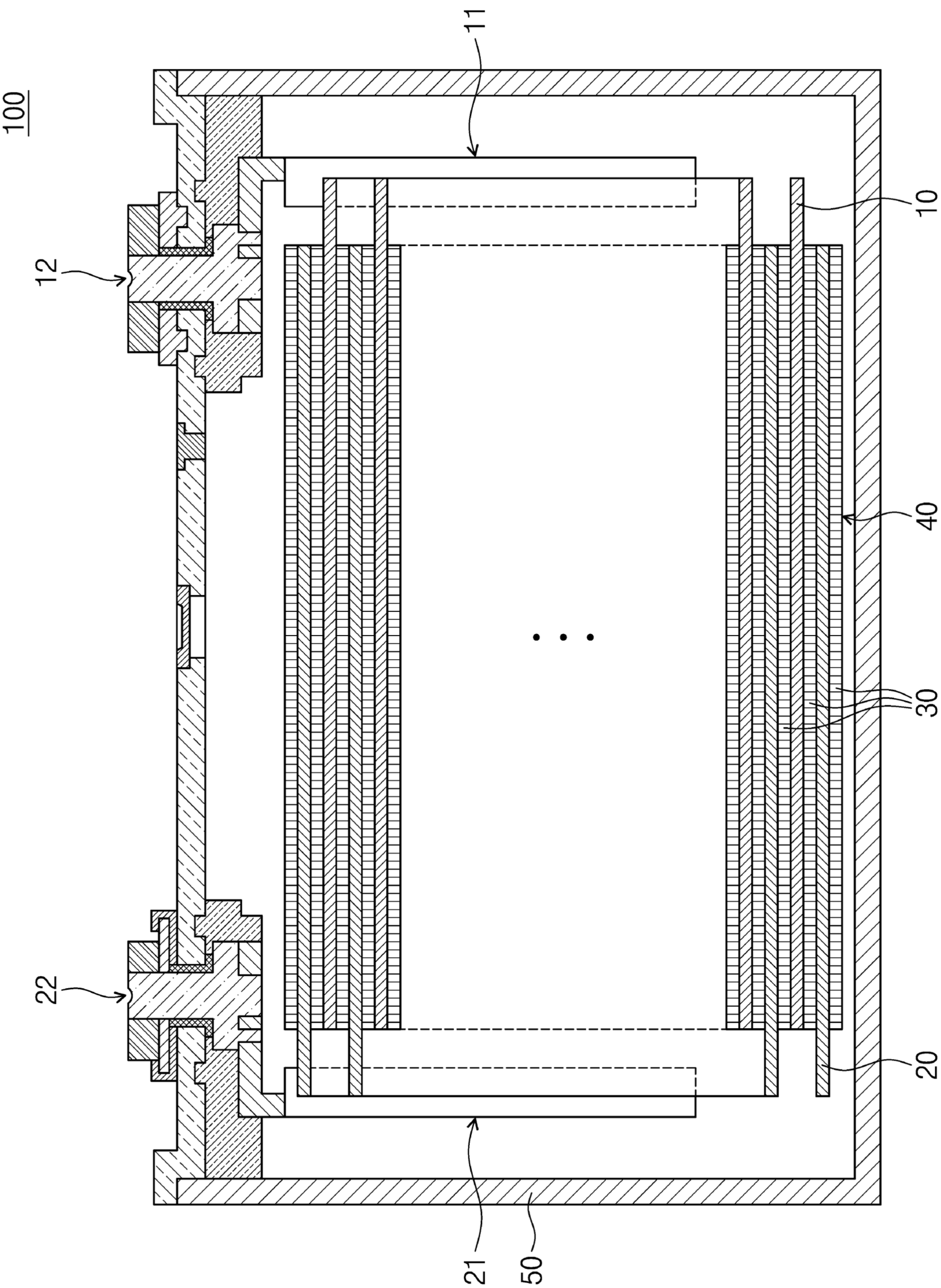


FIG. 3

FIG. 4

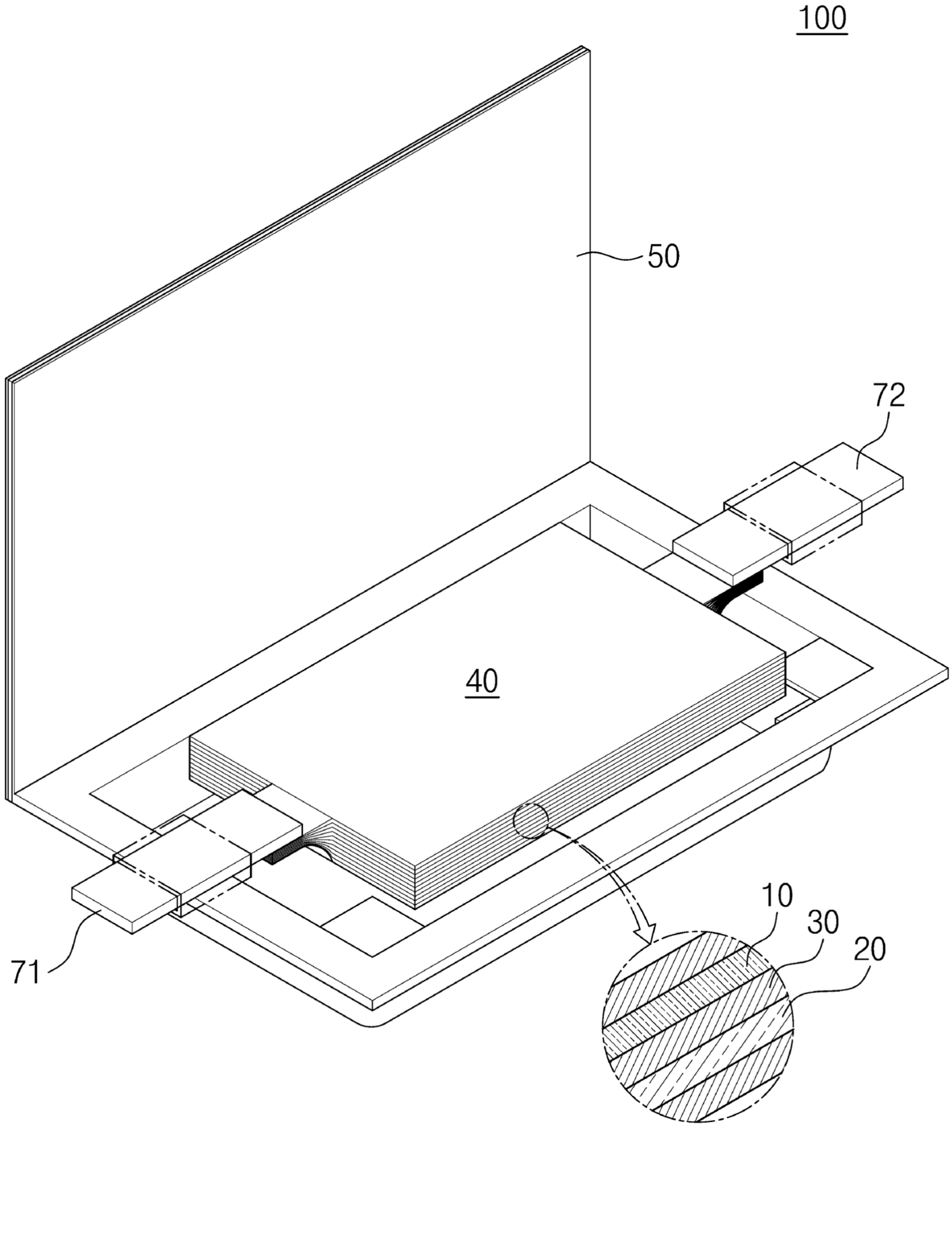

FIG. 5

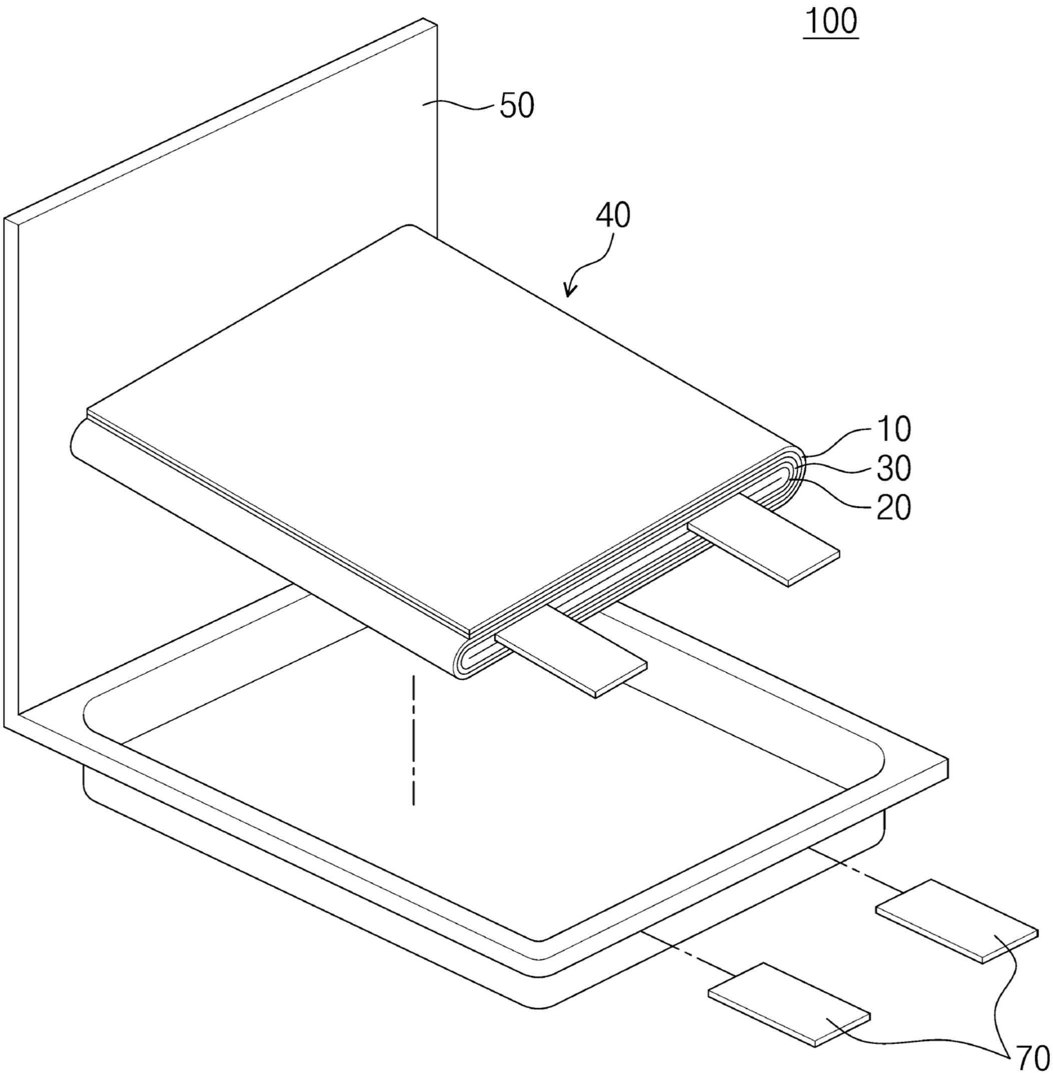

FIG. 6

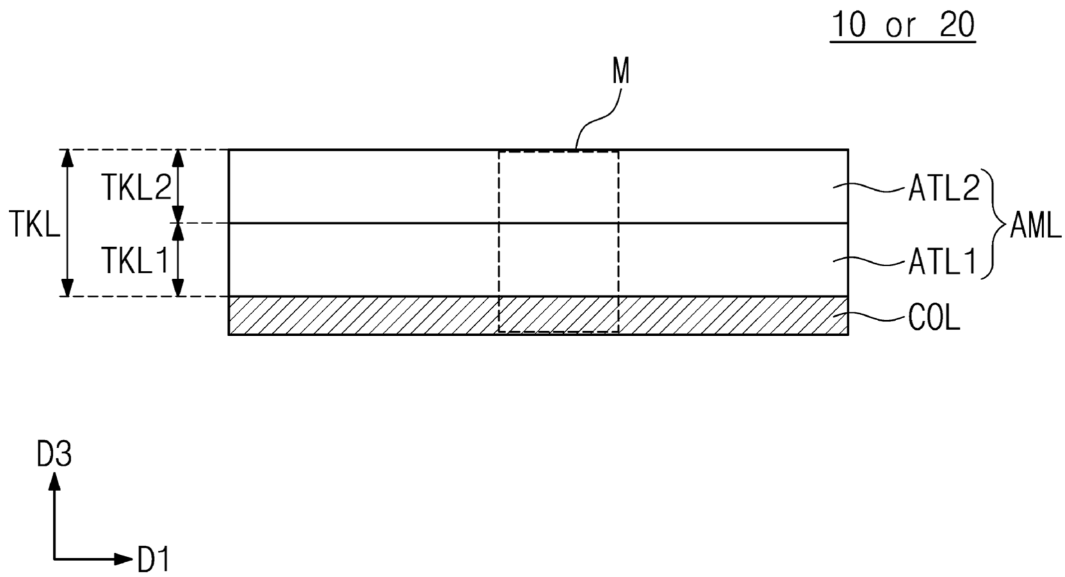

FIG. 7

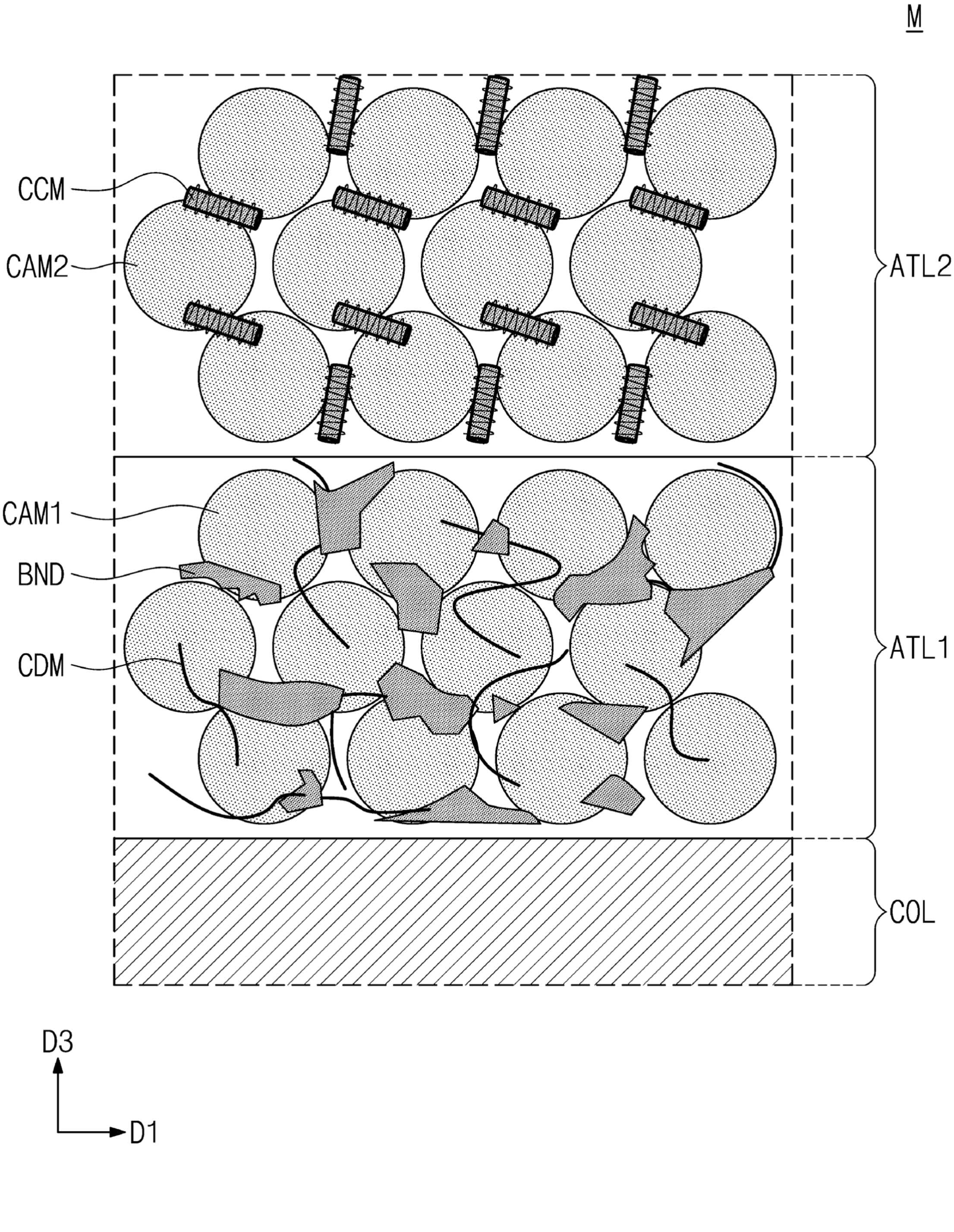

FIG. 8

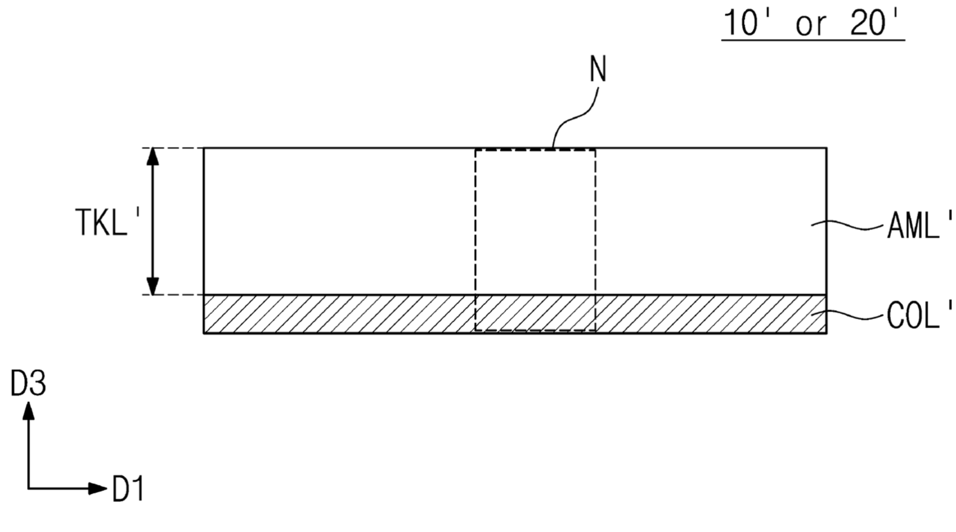

FIG. 9

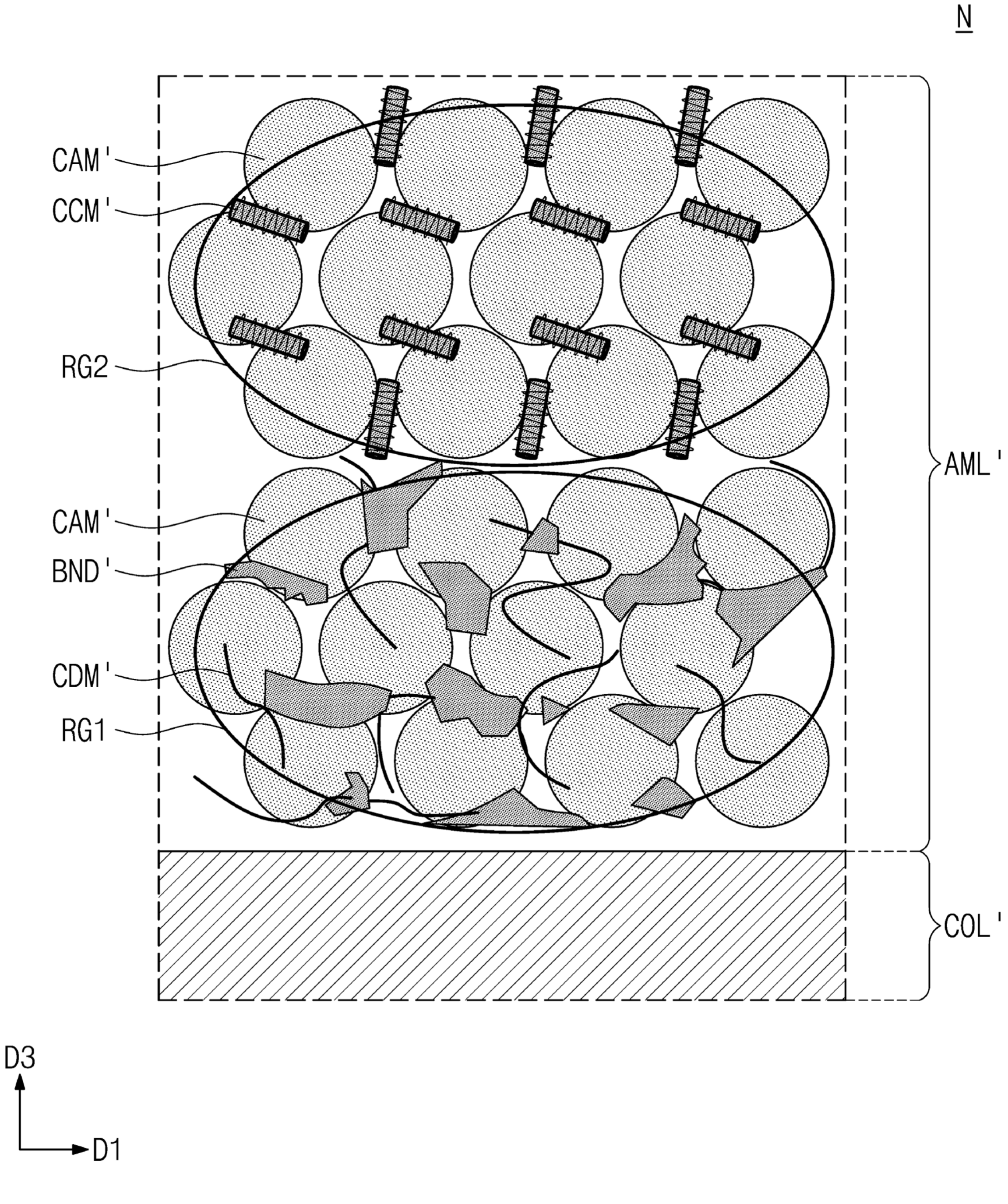

FIG. 10

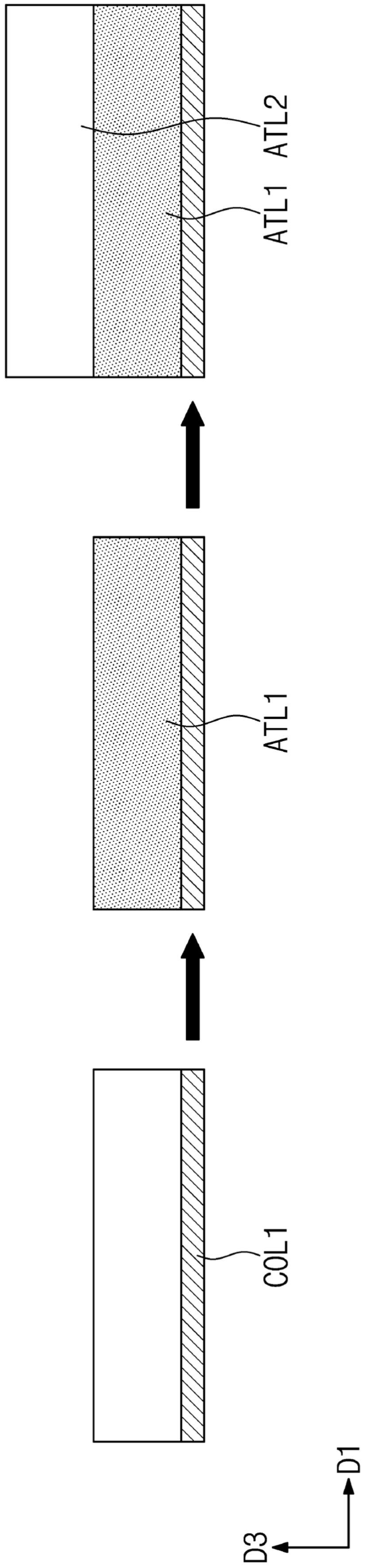
ATL1
ATL2
ATL1
COL1
D1
D3

FIG. 11

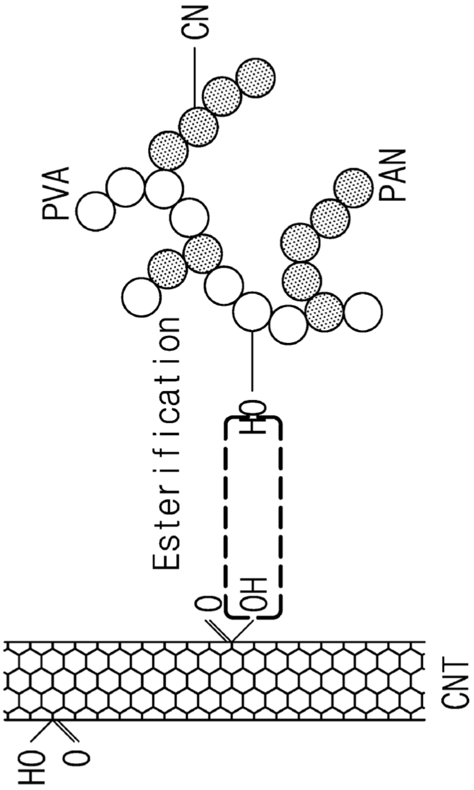
CN
PVA
PAN
Esterification
HO
OH
O
CNT

FIG. 12

[SE,x200,000]

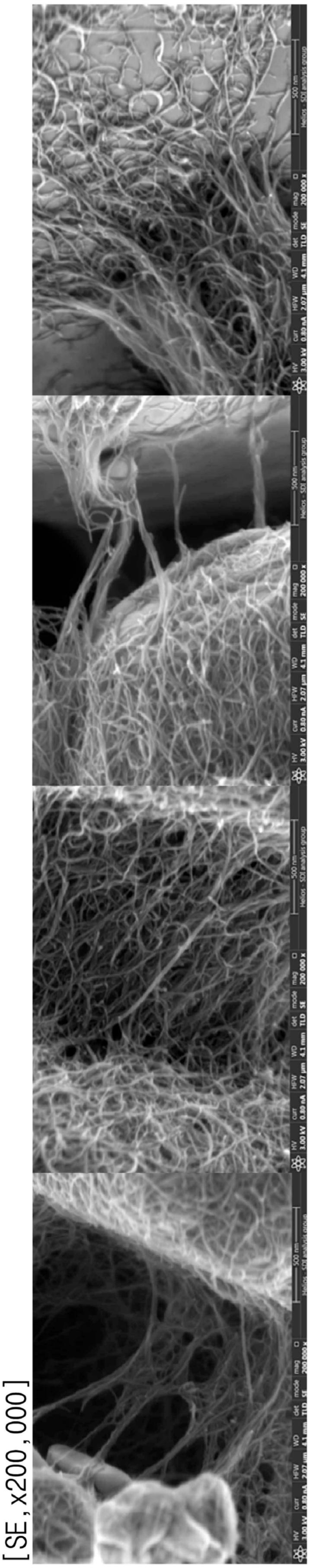

FIG. 13

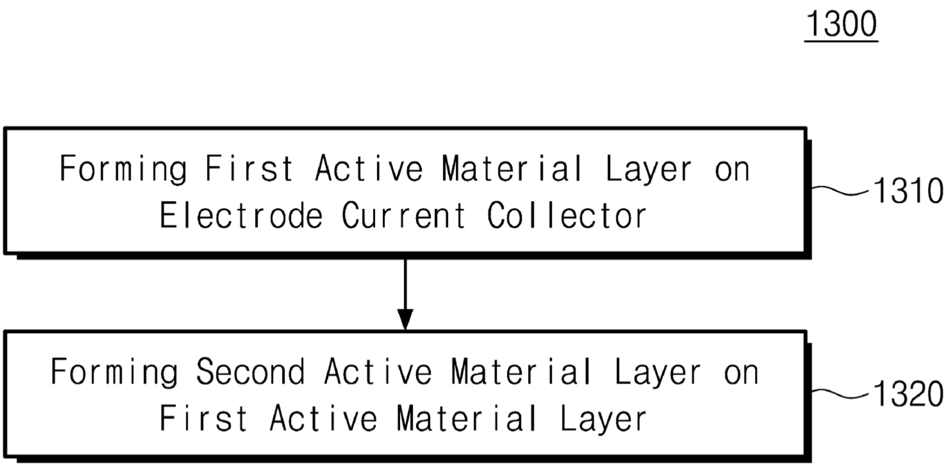
1300
Forming First Active Material Layer on Electrode Current Collector
1310
Forming Second Active Material Layer on First Active Material Layer
1320

Europäisches Patentamt
European Patent Office
Office européen des brevets

# EUROPEAN SEARCH REPORT

Application Number
EP 25 21 7398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 199 140 A1 (LG ENERGY SOLUTION LTD [KR]) 21 June 2023 (2023-06-21)<br>* paragraphs [0108] - [0115]; figure 2; example 1 *<br>----- | 1,2,5-9, 11-15 | INV.<br>H01M4/36<br>H01M4/62<br>H01M4/131 |
| X | CN 107 482 166 A (SHENZHEN BAK BATTERY CO LTD) 15 December 2017 (2017-12-15)<br>* paragraphs [0062] - [0084], [0077] - [0084]; examples 2-5 *<br>----- | 1-7,11, 12 | |
| X | ZHOU HEYANG ET AL: "Electrochemical performance of lithium-ion batteries with two-layer gradient electrode architectures",<br>ELECTROCHIMICA ACTA,<br>vol. 476, 14 December 2023 (2023-12-14), page 143656, XP093352882,<br>AMSTERDAM, NL<br>ISSN: 0013-4686, DOI: 10.1016/j.electacta.2023.143656<br>Retrieved from the Internet:<br>URL:https://pdf.sciencedirectassets.com/271355/1-s2.0-S0013468623X0036X/1-s2.0-S0013468623018248/main.pdf?hash=2a81b70d0b6f7332971d635905deda2ef34ac0339d9344cebf5752d334d72e3b&host=68042c943591013ac2b2430a89b270f6af2c76d8dfd086a07176afe7c76c2c61&pii=S0013468623018248&tid=spdf-555a4443-8df3-4f63-822e-581><br>* Abstract, Introduction, 2.Experimental, 4.2.Particle morphologies in the layers with different particle sizes;<br>figures 1(a) - 1(d), 4(a) - 4/f); table 1 *<br>-----<br>-/-- | 1,2,5,6, 8-12 | TECHNICAL FIELDS SEARCHED (IPC)<br>H01M |

The present search report has been drawn up for all claims

1

| Place of search | Date of completion of the search | Examiner |
|---|---|---|
| The Hague | 23 January 2026 | Venceslau Oliveira |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 1 of 3

Europäisches Patentamt
European Patent Office
Office européen des brevets

# EUROPEAN SEARCH REPORT

Application Number
EP 25 21 7398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/144600 A1 (ZHONG HUAWEI [CN] ET AL) 7 May 2020 (2020-05-07)<br>* Embodiment 1;<br>paragraph [0084]; figures 1-4 *<br>----- | 1,2,5-8, 11,12 | |
| T | PREDTECHENSKIY MIKHAIL R. ET AL: "New perspectives in SWCNT applications: Tuball SWCNTs. Part 1. Tuball by itself-All you need to know about it",<br>CARBON TRENDS,<br>vol. 8, 1 July 2022 (2022-07-01), page 100175, XP093355786,<br>ISSN: 2667-0569, DOI: 10.1016/j.cartre.2022.100175<br>Retrieved from the Internet:<br>URL:https://www.sciencedirect.com/science/article/pii/S2667056922000311><br>* abstract; table 1 *<br>----- | | |
| A | ALI ZULFIQAR ET AL: "Critical review on the characterization, preparation, and enhanced mechanical, thermal, and electrical properties of carbon nanotubes and their hybrid filler polymer composites for various applications",<br>COMPOSITES PART C: OPEN ACCESS,<br>vol. 13, 1 March 2024 (2024-03-01), page 100434, XP093355811,<br>ISSN: 2666-6820, DOI: 10.1016/j.jcomc.2024.100434<br>Retrieved from the Internet:<br>URL:https://www.sciencedirect.com/science/article/pii/S2666682024000057?.com><br>* Sections 4, 5, 9.4 *<br>-----<br>-/-- | 1-15 | TECHNICAL FIELDS SEARCHED (IPC) |

The present search report has been drawn up for all claims

1

| Place of search | Date of completion of the search | Examiner |
|---|---|---|
| The Hague | 23 January 2026 | Venceslau Oliveira |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

Europäisches Patentamt
European Patent Office
Office européen des brevets

# EUROPEAN SEARCH REPORT

Application Number
EP 25 21 7398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SONI SOURABH KUMAR ET AL: "Carbon nanotubes as exceptional nanofillers in polymer and polymer/fiber nanocomposites: An extensive review", MATERIALS TODAY COMMUNICATIONS, vol. 37, 1 December 2023 (2023-12-01), page 107358, XP093355812, GB ISSN: 2352-4928, DOI: 10.1016/j.mtcomm.2023.107358 Retrieved from the Internet: URL:https://www.sciencedirect.com/science/article/pii/S2352492823020494?.com> * 2.1, 2.1.1; tables 1,2-4 * ----- | 1-15 | |

TECHNICAL FIELDS SEARCHED (IPC)

The present search report has been drawn up for all claims

1

| Place of search | Date of completion of the search | Examiner |
|---|---|---|
| The Hague | 23 January 2026 | Venceslau Oliveira |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 21 7398

This annex lists the patent family members relating to the patent documents cited in the above-mentioned European search report. The members are as contained in the European Patent Office EDP file on The European Patent Office is in no way liable for these particulars which are merely given for the purpose of information.

23-01-2026

| Patent document cited in search report | Publication date | Patent family member(s) | Publication date |
| --- | --- | --- | --- |
| EP 4199140 A1 | 21-06-2023 | CN 116261792 A | 13-06-2023 |
| | | EP 4199140 A1 | 21-06-2023 |
| | | EP 4542705 A2 | 23-04-2025 |
| | | ES 3031408 T3 | 08-07-2025 |
| | | HU E071762 T2 | 28-09-2025 |
| | | JP 7463618 B2 | 08-04-2024 |
| | | JP 2023540088 A | 21-09-2023 |
| | | KR 20230000428 A | 02-01-2023 |
| | | PL 4199140 T3 | 14-07-2025 |
| | | US 2024030428 A1 | 25-01-2024 |
| | | WO 2022270799 A1 | 29-12-2022 |
| CN 107482166 A | 15-12-2017 | NONE | |
| US 2020144600 A1 | 07-05-2020 | CN 109461882 A | 12-03-2019 |
| | | CN 113675366 A | 19-11-2021 |
| | | CN 113675367 A | 19-11-2021 |
| | | US 2020144600 A1 | 07-05-2020 |
| | | US 2022006072 A1 | 06-01-2022 |
| | | US 2022006073 A1 | 06-01-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020240166222FILEDON